# EUROPEAN PATENT APPLICATION

(11) **EP 2 597 839 A1**
(43) Date of publication of application: **29.05.2013**
(21) Application number: 12194275.9
(22) Date of filing: 26.11.2012
(51) Int. Cl.: H04L 29/06

(54) **Transparen Bridge Device for protecting network services**

(30) Priority: 28.11.2011 US 201161563961 P; 08.06.2012 US 201261657703 P
(71) Applicant: Pika Technologies Inc., Kanata Ontario K2K 2B8 (CA)
(72) Inventor: Tryc, Wojciech, Kanata, Ontario K2M 2V7 (CA); Karneef, Pierre, Kanata, Ontario K2M 2Z7 (CA)
(74) Representative: Talbot-Ponsonby, Daniel Frederick

(57) **Abstract**

The device provides protection for VoIP or like time-sensitive traffic. Packets arriving at a network interface in the data link layer are inspected to identify signaling packet, which are then queued for further analysis. The signaling packets are analyzed for compliance with adaptive criteria to determine whether the packets are considered safe to pass to a user, and the signaling packets failing to meet the adaptive criteria are rejected. The adaptive criteria based are updated based on historical data pertaining to the signaling packets from the same source address for the same user account.

## Description

### Field of the Invention

This invention relates to the field of networking, and in particular a method of protecting network traffic, such as Voice over Internet Protocol (VoIP) telephony, and in particular to a device of for the protection of VoIP or like services.

### Background of the Invention

In VoIP systems a signaling protocol known as SIP (Session Initiation Protocol) is used to create a signaling session between two entities, to set up a call so that voice packets can be streamed between the parties over the Internet. The voice data is packetized and streamed with minimal latency using Real-Time Transport Protocol (RTP). VoIP telephone systems are susceptible to attacks, as are any internet-connected services. Hackers who know about vulnerabilities, such as insecure passwords, can institute denial-of-service, make phone calls to (premium rate) number with high charges, harvest customer data, record conversations and break into voice mailboxes.

Most users are not experts in properly configuring their network or PBX to avoid such attacks, and as a result may face unpleasant surprises in the form of the previously mentioned issues and high bills from their telco.

Firewalls, routers, VPNs, intrusion detection systems are all means used to protect networks from attackers. Traditionally, a firewall is often implemented as part of a router. Most homes have one as part of their high speed Internet modem (which in many cases is a router and firewall at the same time). A firewall inspects and filters traffic and decides what to do with each and every packet. Normally a device containing a firewall has two network interfaces, an external and internal interface. The external interface is connected to the public Internet, while the internal interface in connected to an internal (private) network. Each of these two interfaces has a layer 3 presence, which means they operate at the network level with an IP address. When an incoming packet from the Internet is received on the external interface, the firewall inspects it and modifies certain fields in the packet header (NAT) and accordingly sends it out via the internal interface to the final destination or next hop.

A traditional firewall has several drawbacks. It is not easy to add such a firewall to an existing network. The internal and external interfaces require IP addresses and create subnet issues. Hosts need to be re-configured to see this device as their gateway. In essence everything in the existing network needs to be made aware of this firewall. This means potential configuration issues as well as good up-front planning to avoid any downtime.

Each packet requires processing: inspection, modification and routing. This can impact overall network performance. This overhead can be controlled but requires the use of better and more expensive hardware.

A conventional firewall can be seen by anyone on the outside. For attackers, it is therefore possible to determine what type of firewall is used. With this knowledge they can use any known techniques or exploits to hack it.

It is possible with conventional techniques to properly protect networks, but it can be a hassle and time-consuming effort to keep things going.

The downside of the traditional firewall is that it not only needs to inspect every packet, but also needs to modify and route it afterwards. A transparent firewall also inspects packets, but does not need to modify or route them; it only needs to make sure the packet is sent to the proper physical interface. It does this by stepping down one layer in the OSI network model to operate at layer 2 (data link layer) opposed to a traditional firewall operating at layer 3 (network layer). Devices operating this way are also referred to as in-line, stealth or bridging firewalls.

As is known in the art, in accordance with the OSI model, a communication system is modeled in terms of seven layers, namely the Application Layer (7), which interacts with the software application, the Presentation Layer (6), which presents the data in a form suitable for acceptance by the Application layer, the Session Layer (5), which establishes the type of operation between computers, the Transport Layer (4), which establishes a reliable communications link between the users, the Network Layer (3), which provides unreliable delivery of packets, the Data Link Layer (2), which provides the means to transfer data within a specific network, and the Physical Layer (1), which physically transports the bits of data.

A transparent firewall basically just moves packets from one interface to the other in layer 2; the only thing it does is inspect the packets. This is obviously a much simpler network device than the traditional firewall. However, a traditional transparent firewall due to the need to perform deep packet inspection on all the packets at layer 2 would introduce unacceptable latency into a VoIP stream, which is inherently time sensitive.

### Summary of the Invention

According to the present invention there is provided a method for protecting VoIP services, comprising inspecting the payload of packets arriving at a network interface in the data link layer to identify signaling packets; queuing the signaling packets for further analysis; analyzing the signaling packets for compliance with adaptive criteria to determine whether the packets are considered safe to pass to a user; rejecting the signaling packets failing to meet the adaptive criteria; maintaining historical data pertaining to the analyzed signaling packets; and updating the adaptive criteria based on the historical data pertaining to the signaling packets from the same source address for the same user account.

By performing deep packet inspection on only the signaling packets, the impact on performance in terms of latency is minimal, yet the object of preventing a third party from interfering with, or inappropriately setting up or tearing down calls, can be achieved. The VoIP packets themselves only carry audio or video data and thus do not contribute to malicious attacks. There is thus no need to filter them for the purpose of fraud protection.

Although the specification throughout refers to VoIP services, it will be understood that this term is also used to encompass similar video services, such as video telephone calls or any other web services for that matter where certain type(s) of traffic are analyzed in more depth before making a decision.

In this way, it is possible to detect certain attacks using simple pattern matching techniques. The device is simply put in-line with the network, typically the VoIP PBX. Since the device does not modify packets, but merely moves them from one interface to another there is no need to make any configuration changes to the network (zero configuration).

Since the device can be made relatively simple, there much less overhead then with a traditional firewall. This means it can deal with lesser hardware or it can do more extensive filtering.

A key aspect of the invention is that the device operates at layer 2 of the OSI model. The interfaces to the device therefore have no IP addresses. This is not only an advantage from a configuration perspective, but it also makes the device invisible to the outside world. The device is not reachable by an IP number unless a 3rd interface operating at the network layer is deliberately added to provide configuration access. Such a device is much harder to attack. It silently inspects anything sent from or to the devices that are behind it. The device also takes into account historical data such as previous failed user attempts form the same source for the same account. For example, if multiple attempts for a connection are made from the same source for the same account using different passwords, the device will reject future registration request packets from that source. The account is defined by the destination IP address and the user name/number.

The monitoring engine accepts modules that define certain criteria including: patterns (event description), number of occurrences (how many times a particular occurrence will be allowed), and frequency (how often will it be allowed to happen).

A flood attack occurs when there are multiple registration attempts to a single account from a single IP address. In this case, the device generates an event upon exceeding a predefined threshold of attempts within a given period of time.

If the device detects incorrect disconnection attempts (40X), it assumes a disconnection hijack and generates an event upon detection.

The device may also monitor any known SIP security holes to allow calls to be setup or not torn down outbound destinations using blacklist or rate tables using a list of fraudulent destinations The device may have a third interface operating at layer 3, with an IP address to allow the device to be accessed for the purpose of making configuration changes or firmware updates. It could alternatively be accessed through a USB port.

In another embodiment, a special flag may be embedded in the SIP packets to alert the device to the fact that the packet is a control packet destined for the device. This can be encrypted to prevent third parties accessing the device.

The device may use multiple packet queues. In combination with the historic data built up, this will allow it do a first analysis of a packet and queue the packet accordingly. Packets from a previously known/safe location are therefor analyzed with priority, causing minimal impact on existing valid devices connected to the PBX while being under attack from other sources.

According to another aspect of the invention there is provided a transparent bridging device for protecting network services having a data link layer network interface and a user interface, comprising: a filter for extracting signaling packets arriving at a network interface in the data link layer by examining the payload; and at least one queue for queuing the signaling packets for further analysis; and a packet analyzer configured to analyze the signaling packets for compliance with adaptive criteria to determine whether the packets are considered safe to pass to a user, rejecting the signaling packets failing to meet the adaptive criteria, maintaining historical data pertaining to the analyzed signaling packets; and updating the adaptive criteria based on the historical data pertaining to the signaling packets from the same source address for the same user account. The invention is particularly applicable to VoIP and like services.

In accordance with another embodiment of the invention, it may be desirable to access the device without using a third interface. This can be achieved by embedding in the payload of a packet addressed to a network layer device downstream of the bridging device a flag identifying the packet or subsequent packets as containing data destined for the bridging device, and embedding the data in the payload of the packet and/or subsequent packets for retrieval at the bridging device.

The transparent bridging device typically operates at layer 2 of the OSI model. The network layer is layer 3 or the IP layer. The device may be a transparent firewall or other device, such as a proxy, for example. The invention is applicable to any situation where it is desired to remotely exchange data with a device operating at the data link layer that is invisible to the network layer, i.e. in the case of the Internet does not have its own IP address.

When the device is a transparent firewall, the data may contain an updated listing of blacklisted sites, for example, their IP addresses. It may also contain a firmware upgrade, in which case the data is likely to be spread over multiple packets. In this case, and end-of-data flag may be included in the payload of the last packet.

The method can also be used to send data in the reverse direction, i.e. from the device to a remote server. In this case, the device creates a network layer packet with a spoofed IP source address, which is addressed to the server. This method can be used to report to the server the IP address of an attacker so that this address can be added to the list of blacklisted addresses, for distribution to other devices. This method can also be used for initial registration of the device with a server.

According to this aspect of the invention there is provided a method of sending data from a transparent bridging device operating at a data link layer to an upstream network layer device, comprising creating at the transparent bridging device a packet addressed to the upstream network layer device containing a source address corresponding to a network layer device upstream of the transparent bridging device; embedding the data in the payload of the packet and/or subsequent packets at the bridging device.

The bridge device may also embed a flag identifying the data as for the network layer device, although this may not be necessary since the network layer device will read the packet as an IP packet and observe that the message contained is a control message intended for the server. Typically the packets are control packets, such as SIP packets in a VoIP service because in the case of a transparent firewall, the device is already configured to identify SIP packets. However, the invention is applicable in other situations where control packets pass transparently through any device connected to a network, such as the Internet. Such a device could, for example, be a proxy server or redirector.

In another aspect the invention comprises a method of accessing a transparent bridging device operating at a data link layer, comprising: embedding in the payload of a packet addressed to a network layer device downstream of the bridging device a flag identifying the packet or subsequent packets as containing data destined for the bridging device; and embedding the data in the payload of the packet and/or subsequent packets at the bridging device.

The flag could be contained in a separate field or just be a preamble or pattern in the data recognized by the bridging device.

The method of accessing the transparent bridging device can be applied more generally to any device that is transparent at the network layer. Thus, in another aspect the invention provides a transparent bridging device comprising a module for inspecting incoming control packets addressed to a downstream network layer device to identify a flag in the payload indicative of the presence of data destined for the bridging device; and a module extracting the data from the payload of the packet and/or subsequent packets.

A further aspect provides a transparent bridging device operating at a data link layer, comprising: a packet assembler for creating at the transparent bridging device a packet addressed to a network layer device upstream of the transparent bridging device and containing a source address corresponding to a network layer device downstream of the transparent bridging device; the packet assembler being configured to embed in the payload of the packet a flag identifying the packet or subsequent packets as containing data destined for the bridging device, and to embed the data in the payload of the packet and/or subsequent packets at the bridging device.

### Brief Description of the Drawings

The invention will now be described in more detail, by way of example only, with reference to the accompanying drawings, in which: -
Figure 1 is a schematic diagram of a VoIP telephony system including a device in accordance with an embodiment of the invention;
Figure 2 is a block diagram showing the major components of the device;
Figure 3 is a flow chart showing the packet analysis process;
Figure 4 shows a simplified embodiment of the invention illustrating a method of accessing the device;
Figure 5 shows simplified illustration of the device; and
Figure 6 is a diagram of a modified SIP packet.

### Detailed Description of the Invention

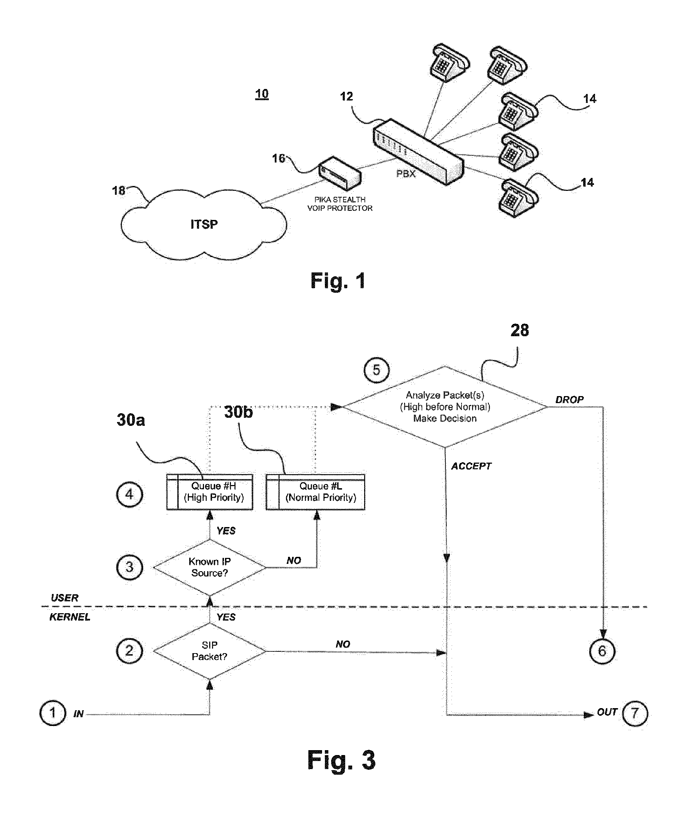

Referring to Figure 1, a VoIP system 10 comprises a VoIP PBX 12 connected over a local network to phones 14. The VoIP PBX 12 is also connected to an Internet Telephony Services Provider (ITSP) attached to the Internet 18 through a device 16 providing a firewall in accordance with an embodiment of the invention. The device operates at the data link layer (layer 2 of the OSI model), and as such does not have an IP address at its interfaces connected respectively to the PBX 12 and ITSP 18. It is thus completely transparent to the outside world. The device may have a third interface operating at layer 3 with its own IP address to permit the device to be accessed for the purpose of upgrading the firmware of performing configuration functions. In an alternative embodiment, the third interface could be a USB interface, or the device may be accessed using modified SIP packets as described below.

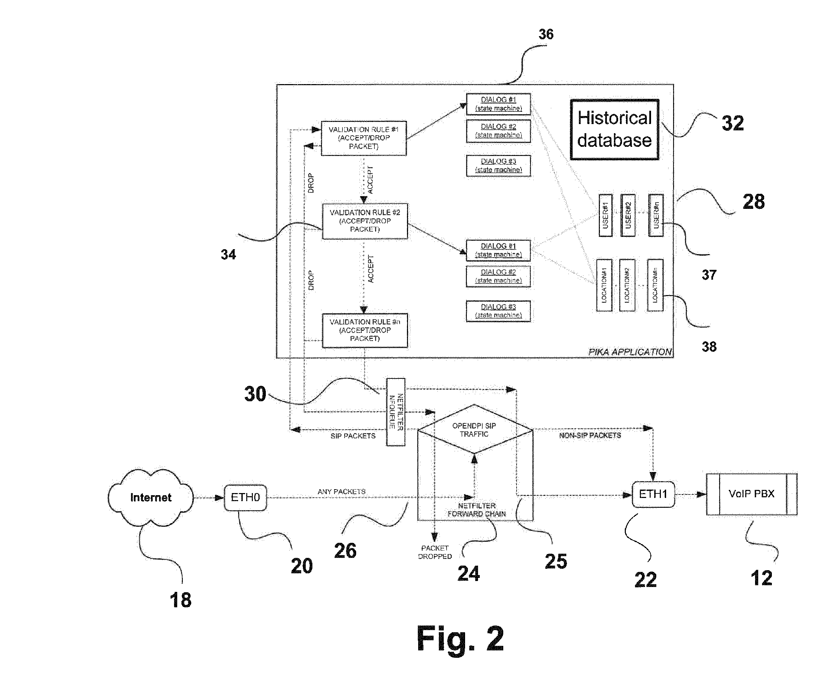

As shown in Figure 2, the device 16 includes a packet analyzer 28 that is based on an open source layer 2 firewall design. It is optimized to utilize the network processor API. In one example an Open source package such as OpenDPI or 17-filter is used to perform deep packet inspection on relevant packets while a custom filter triggers the decision to pass or block the packets.

The actual packet bridging (Layer 2 firewalling) may be performed by customized Linux kernel with bridging/netfiltering functionality enabled. At the same time the routing functionality is disabled so no IP configuration is necessary.

VoIP PBX 12 is connected to the Internet 18 via an Ethernet link through Ethernet bridges 20, 22. VoIP PBX has an IP address and is visible to the outside world. The filter 24, with interfaces 25, 26, is located in the data link layer between the Ethernet bridges 20, 22.

In order to set up or dear down a phone call, the Session Initiation Protocol (SIP), which is a text based protocol, is used to send signaling data between the communicating phones. SIP is an IETF defined protocol for controlling voice and video sessions over the Internet.

The filter 24 intercepts all incoming packets from the Internet and identifies SIP packets. The SIP packets are directed to the analyzer 28, while the non-SIP packets are passed through to the local network via the Ethernet bridge 22.

The packet analyzer 28 comprises validation modules 34, dialog modules 36, user queues 38 and location queues 37. The packet analyzer performs deeper payload inspection on the SIP packets in order to detect predefined patterns and to take action should offensive behaviour be detected. The actual action taken may be to drop the call and possibly block the offending IP address from accessing the PBX for certain period of time. In case of outbound calls, the call may be dropped without further action.

The analyzer 28 applies a rule-based approach to identify suspicious SIP packets and includes a historical database 32 recording previous transactions as will be described below. The recorded data is used to adapt the criteria for determining whether current packets are valid as will be explained.

Figure 3 shows a particular example of the treatment of a SIP packet. At step 1, the filter 24 detects SIP packets arriving form the network interface by looking at the payload. In this example, the following rules are used by the filter 24 to make the decision as to whether a packet will be queued for further analysis based on the fact that it is a SIP packet:
1. Payload size of the packet >= 14 bytes, anything less is not considered a SIP packet
2. Initial SIP sessions need to start with the characters "REGISTER", "INVITE" or possibly "SIP/2.0 200 OK", those packets will be queued up for further analysis.
3. Any additional packets belonging to the same session will also be queued up for further analysis.

The non-SIP packets are passed through the filter 24 to the PBX 12 without delay.

The SIP packets are passed to queue 30 (step 2).

Based on historical data, the originating IP address of the packet is determined from the IP header in the packet. Step 3 determines whether they are high priority or normal priority packets and places them in the appropriate queue 30a, 30b. High priority packets are packets from the same source for the same account that have previously been accepted as safe. All other signaling packets are passed to the normal priority queue. For example, the header may contain the following addresses:
Internet Protocol, Src: **192.168.10.78** (192.168.10.78), Dst: 192.168.10.31 (192.168.10.31)
If the source IP address has been considered safe in the past, the packet will be queued in the high priority queue or otherwise it will end up in the normal priority queue.

The packets are then passed to the packet analyzer 28 in accordance with their priority. At step 5, the packet analyzer 28 performs deep packet inspection and decides whether to drop the packets or pass them based on adaptive criteria, which take into account historical data stored in the historical database 32, such as whether a registration packet has been sent form the same source for the same account and resulted in failure more than a set number of times, for example as a result of an incorrect password.

The same analysis is performed on the packets in both queues, but the packets in the high priority queue are treated with higher priority and analyzed first. Valid registrations and invites are passed through with priority when the user is under attack from an unknown IP source. The packets are then either dropped (step 6) or passed (step 7).

The packet analyzer 28 performs deep payload inspection to look into the payload of a packet to determine whether it is allowed to go through (ACCEPT) or not (DROP).

In order to understand the invention more fully a number of examples will be given. The following is an example of a successful REGISTRATION session.

The first packet we see in this case is a REGISTRATION attempt:
Session Initiation Protocol
Request-Line: **REGISTER** sip:192.168.10.31 SIP/2.0
Message Header
Via: SIP/2.0/UDP 192.168.10.78:6554;
branch=z9hG4bK-d8754z-5e396762af06c213-1---d8754z-;rport
Max-Forwards: 70
Contact: <sip:100**@192.168.10.78**:6554;rinstance=ccd4394e645b084a>
To: "**100**"<sip:**100**@**192.168.10.31**>
From: "100"<sip:l00@192.168.10.31>;tag=1620b66b
Call-ID: MDcwMTA5YTY1NzhiZWM1NmQwZDU1YzBiNWY3ODMxZmE.
CSeq: 1 REGISTER
Expires: 3600
Allow: INVITE, ACK, CANCEL, OPTIONS, BYE, REFER, NOTIFY, MESSAGE, SUBSCRIBE, INFO
User-Agent: eyeBeam release 1105z stamp 59031
Content-Length: 0

The REGISTRATION is received from IP address 192.168.10.78 (a SIP soft-phone) and goes towards 192.168.10.31 (a SIP based PBX). The user account that tries to register is 100.

At this point, the analyzer checks to see if this user has seen multiple failed registration attempts in a certain time frame up to this point, and if so, refuses to let the REGISTRATION packet go through.

The analyzer also determines whether the source IP address of this packet has been generating an unusual amount of packets in a certain time up to this point. If so, it may drop the packet.

Assuming however this is not the case, then, as the SIP server requires authentication, the standard response by the server to this packet is a 401 Unauthorized:
Session Initiation Protocol
Status-Line: SIP/2.0 401 Unauthorized
Message Header
Via: SIP/2.0/UDP 192.168.10.78:6554;
branch=z9hG4bK-d8754z-5e396762af06c213-1---d8754z-;
received=192.168.10.78;rport=6554
From: "100"<sip:100@192.168.10.31>;tag=1620b66b
To: "100"<sip:100@192.168.10.31>;tag=as4f04b7dc
Call-ID: MDcwMTA5YTY1NzhiZWM1NmQwZDU1YzBiNWY3ODMxZmE.
CSeq:1 REGISTER
Server: FPBX-2.9.0(1.8.4.4)
Allow: INVITE, ACK, CANCEL, OPTIONS, BYE, REFER, SUBSCRIBE, NOTIFY, INFO, PUBLISH
Supported: replaces, timer
WWW-Authenticate: Digest algorithm=MD5, realm="asterisk", nonce="2c5bc111" Content-Length: 0

Based on this response, the SIP soft-phone will send another REGISTER request, but this time with the authentication credentials:
Session Initiation Protocol
Request-Line: **REGISTER** sip:192.168.10.31 SIP/2.0
Message Header
Via: SIP/2.0/UDP 192.168.10.78:6554;
branch=z9hG4bK-d8754z-474bfb67a84a4e69-1---d8754z-;rport
Max-Forwards: 70
Contact: <sip:100@**192.16.10.78**:6554;rinstance=ccd4394e645b084a>
To: **"100"**<sip:**100**@**192.168.10.31**>
From: "100"<sip:100@192.168.10.31>;tag=1620b66b
Call-ID: MDcwMTA5YTY1NzhiZWM1NmQwZDU1YzBiNWY3ODMxZmE.
CSeq: 2 REGISTER
Expires: 3600
Allow: INVITE, ACK, CANCEL, OPTIONS, BYE, REFER, NOTIFY, MESSAGE, SUBSCRIBE, INFO
User-Agent: eyeBeam release 1105z stamp 59031
Authorization: Digest username="**100**",realm="asterisk",nonce="2c5bc111",
uri="sip:192.168.10.31",response="ce09be2d1434clda8d091f911d1802c3",algorithm=M D5
Content-Length: 0

Since the authentication is valid in this case, the server will respond with a 200 OK and the Expires field shows a timeout of 3600 seconds, indicating that the caller is registered for that period:
Session Initiation Protocol
Status-Line: SIP/2.0 **200 OK**
Message Header
Via: SIP/2.0/UDP 192.168.10.78:6554;
branch=z9hG4bK-d8754z-474bfb67a84a4e69-1---d8754z-;
received=192.168.10.78;rport=6554
From: "100"<sip:100@192.168.10.31>;tag=1620b66b
To: "100"<sip:100@192.168.10.31>;tag=as4f04b7dc
Call-ID: MDcwMTA5YTY1NzhiZWM1NmQwZDU1YzBiNWY3ODMxZmE.
CSeq: 2 REGISTER
Server: FPBX-2.9.0(1.8.4.4)
Allow: INVITE, ACK, CANCEL, OPTIONS, BYE, REFER, SUBSCRIBE, NOTIFY, INFO, PUBLISH
Supported: replaces, timer
**Expires: 3600**
Contact: <sip:100@192.168.10.78:6554;rinstance-=ccd4394e645b084a>;expires=3600
Date: Wed, 05 Oct 2011 13:08:49 GMT
Content-Length: 0

At this point, the historical data for the user and the source IP address are updated, so that any future packets can make use of this data in their decision process.

We will now look at a session where an incorrect password is provided to authenticate. We start off again with the REGISTER request:
Session Initiation Protocol
Request-Line: **REGISTER** sip:192.168.10.31 SIP/2.0
Message Header
Via: SIP/2.0/UDP 192.168.10.78:25698;
branch=z9hG4bK-d8754z-253a7500a015f24a-1---d8754z-;rport
Max-Forwards: 70
Contact: <sip:100@**192.168.10.78:**25698;rinstance=28221de545865958>;expires=0
To: **"100"**<sip:**100@192.168.10.31>**
From: "100"<sip:100@192.168.10.31>;tag=04151f42
Call-ID: ZD1mYmMOZmY5NzQwY2MzOTyMTYzMWRjYmJiY2V1MzM.
CSeq:3 3 REGISTER
Allow: INVITE, ACK, CANCEL, OPTIONS, BYE, REFER, NOTIFY, MESSAGE, SUBSCRIBE, INFO
User-Agent: eyeBeam release 1105z stamp 59031
Authorization: Digest usemame="100",realm="asterisk",nonce="24f8313d",
uri="sip:192.168.10.31",response="5912599da929d16cf7f20336fc291529",algorithm=MD5 Content-Length: 0

This, as for the valid scenario, causes a 401 Unauthorized from the server as no credentials have been provided:
Session Initiation Protocol
Status-Line: SIP/2.0 **401 Unauthorized**
Message Header
Via: SIP/2.0/UDP 192.168.10.78:25698;
branch=z9hG4bK-d8754z-253a7500a015f24a-1---d8754z-;
received=192.168.10.78;rport=25698
From: "100"<sip:100@192.168.10.31>;tag=04151f42
To: "100"<sip:100@192.168.10.31>;tag=as3a65c806
Call-ID: ZDImYmM0ZmY5NzQwY2MzOTMyMTYzMWRjYmJiY2VIMzM.
CSeq: 3 REGISTER
Server: FPBX-2.9.0(1.8.4.4)
Allow: INVITE, ACK, CANCEL, OPTIONS, BYE, REFER, SUBSCRIBE, NOTIFY, INFO, PUBLISH
Supported: replaces, timer
WWW-Authenticate: Digest algorithm=MD5, realm="asterisk", nonce="44daa6af" Content-Length: 0

So our SIP client sends another REGISTER request, this time with the credentials for user 100:
Session Initiation Protocol
Request-Line: **REGISTER** sip:192.168.10.31 SIP/2.0
Message Header
Via: SIP/2.0/UDP 192.168.10.78:25698;
branch=z9hG4bK-d8754z-476144581b0eba40-1---d8754z-;rport Max-Forwards: 70
Contact: <sip:100@**192.168.10.78**:25698;rinstance=28221de545865958>;expires=0 To: **"100"**<sip:**100**@**192.168.10.31**>
From: "100"<sip:100@192.168.10.31>;tag=04151f42
Call-ID: ZDlmYmM0ZmY5NzQwY2MzOTMyMTYzMWRjYmJiY2VlMzM.
CSeq:4 REGISTER
Allow: INVITE, ACK, CANCEL, OPTIONS, BYE, REFER, NOTIFY, MESSAGE, SUBSCRIBE, INFO
User-Agent: eyeBeam release 1105z stamp 59031
Authorization: Digest username="100",realm="asterisk",nonce="44daa6af", uri="sip: 192.168.10.31",response="dfc4e54b360cf33010069adb34b60a41",algorithm=M D5
Content-Length: 0

As in this case we have provided an incorrect password for user 100, a 200 OK is returned, but with the expiration time of 0, meaning we are not registered:
Session Initiation Protocol
Status-Line: SIP/2.0 **200 OK**
Message Header
Via: SIP/2.0/UDP 192.168.10.78:25698;
branch=z9hG4bK-d8754z-476144581b0eba40-1---d8754z-;
received=192.168.10.78;rport=25698
From: "100"<sip:100@192.168.10.31>;tag=04151f42
To: "100"<sip:100@192.168.10.31>;tag=as3a65c806
Call-ID: ZDlmYmM0ZmY5NzQwY2MzOTyMTYzMWRjYmJiY2VlMzM.
CSeq: 4 REGISTER
Server: FPBX-2.9.0(1.8.4.4)
Allow: INVITE, ACK, CANCEL, OPTIONS, BYE, REFER, SUBSCRIBE, NOTIFY, INFO, PUBLISH
Supported: replaces, timer
**Expires: 0**
Date: Wed, 05 Oct 2011 13:07:57 GMT
Content-Length: 0

Based on this, the packet analyzer 28 now keep tracks of the fact that for this particular user, an invalid registration attempt was made. The analyzer also keeps track of the IP number from which this attempt originated. This data will be used again to analyze future SIP packets.

Some SIP clients try a REGISTER sequence again, in which case we sometimes see a 403 Forbidden as a response from the server:
Session Initiation Protocol
Status-Line: SIP/2.0 **403 Forbidden** (Bad auth)
Message Header
Via: SIP/2.0/UDP 192.168.10.78:54922;
branch=z9hG4bK-d8754z-fd700514c35dee71-1---d8754z-;
received=192.168.10.78;rport=54922
From: "100"<sip:100@192.168.10.31>;tag=d239046d
To: "100"<sip:100@192.168.10.31>;tag=asla77f4cd
Call-ID: M2Q1ZTczMTcwNTcxYmQ0Mzg5YTQ1ZjcyMGQ3NzUxN2U.
CSeq: 2 REGISTER
Server: FPBX-2.9.0(1.8.4.4)
Allow: INVITE, ACK, CANCEL, OPTIONS, BYE, REFER, SUBSCRIBE, NOTIFY, INFO, PUBLISH
Supported: replaces, timer
Content-Length: 0

This is also considered a failure attempt and is also tracked in the historical database 32.

If the packet analyzer 28 determines the packet should be dropped, the device drops the packet and hence it won't go out of the outgoing network interface. This means the packet will never reach the VoIP server situated behind the device.

If the packet analyzer 28 determines that the packet is to be allowed to go through, the device accepts the packet and allows it to continue its path via the outgoing network interface towards the VoIP server situated behind the device.

It will be appreciated that the above illustration is purely exemplary, and the same principles can be applied to other exchanges wherein a request from a remote client results in a response from the local user.

An important aspect of the invention is transparency as a result of the fact that the device operates at layer 2. No IP addresses need to be assigned to the filter for stealth packet inspection. However, in order to allow for provisioning over the Internet, an IP address can be assigned to a separate interface to allow proper point-to-to point communication. Such an address could be obtained automatically and possibly could be assigned to a virtual interface associated with one of the physical interfaces. This would also enable the device to be accessed for maintenance and/or how performing automated firmware updates using a third interface, which could be physical Ethernet or Wifi.

Alternatively, it could be assigned an IP address to one of the interfaces, although this potentially jeopardizes the security. Alternative devices could be used such using Bluetooth to communicate directly with IOS or Android devices or a special maintenance mode which would set the box into the special mode with IP address assigned to one of the interfaces. Serial port for management purposes would be an option as well.

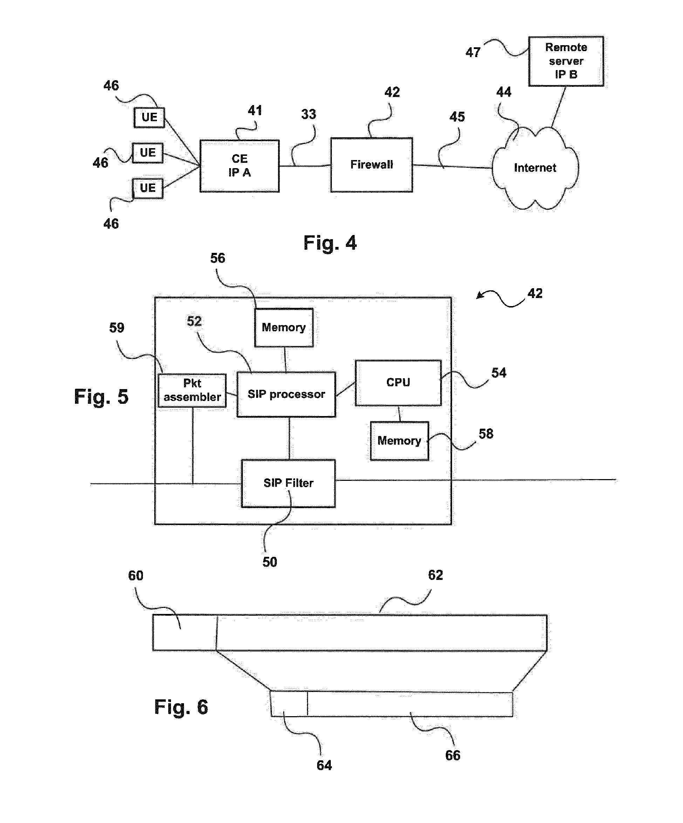

In accordance with another embodiment the device may be accessed through the network interface by embedding a special flag within the payload of SIP packets to notify the device that the packet is destined for the device. In Figure 4, customer equipment in the form of a VoIP PBX, 41 with IP address A is connected to transparent firewall 42 over link 33. The device provides the transparent firewall 42, which is in turn connected to a distributed IP network 44, such as the Internet, over link 45. The customer equipment 41 is in turn connected to user stations 46, for example over a LAN. The user stations 46 may be, for example, VoIP Telephone sets.

As noted above, because the firewall 42 operates at layer 2 of the OSI model, i.e. the data link layer, and it not have a layer 3 visibility. It passes user datagram packets, such as VoIP packets through transparently. As explained above, it recognizes signaling packets, such as SIP packets, from their payload and inspects them to ensure that they comply with certain rules in order to prevent a malicious attack. For example, it may reject packets from a certain IP address known to be suspicious, or packets that repeatedly try different passwords to set up a connection.

However, the fact that the firewall does not have layer 3 visibility means neither the service provider nor the user can normally access the firewall 42 for control purposes other than by a direct physical connection, for example through a USB port. This invisibility is of course deliberate in order to minimize the chance of the device being attacked by a malicious third party.

It is desirable, however, for the remote server 47 belonging to the service provide and with IP address B to communicate with the firewall 42 in order to update the firmware or a blacklist for example. As noted above, it is not possible to communicate using conventional IP addressing. Figure 5 shows the transparent firewall 42 in accordance with this embodiment of the invention in more detail. The SIP filter 50 identifies incoming SIP packets from the Internet 44 destined for the CE 41 and passes them to the SIP processor for processing. VoIP packets are passed straight through to the customer equipment 1.

The SIP processor 52 ensures that the SPI packets comply with the firewall rules stored in memory 56. In addition the SIP processor identifies any SIP packets with a flag in the payload identifying the packet and/or subsequent packets as containing data for the firewall from a flag in the SIP payload. The data may take various forms. For example, it may contain a list of blacklisted IP addresses, which the device stores in memory 56 and which the SIP processor uses to block potential attacks. It may also contain a firmware upgrade, which may be stored in in memory 58. Since such an upgrade may be 3 Mbytes long, it will take more than one packet to transmit the data. In this case, the data can be carried in several packets. The first packet containing the flag indicates the start of the data and then a subsequent packet with an end-of data flag can be transmitted when the complete message has been sent.

The SIP processor 52 extracts and decrypts the data and passes it to the control processor 54 for storage in the memory 58 in the case of instructions or a firmware upgrade or to the memory 56 if it relates to the firewall rules, for example, the list of blacklisted sites.

The packets are created by a packet assembler 59 in the remote server 47.

It is also desirable for the device 42 to be able to communicate with the remote server 47 for several reasons. First, when a new device is installed it needs to register with the remote server 47, and second when the device detects an attack, it needs to be able to communicate the IP address of the attacker to the remote server 47 so that the latter can include this IP address in its blacklist, which can then be re-broadcast to other servers using the same technique.

This is achieved by creating an IP packet within the device with a spoofed IP address so that the packet appears to originate from the customer equipment 41. Packet assembler assembles a packet with a destination IP address B corresponding to the remote server and a source IP address A corresponding to the CE 41. The data is inserted in the payload. A flag may inserted in field 24 to alert the server to the fact that the packet contains data for the server, although that may not necessary in this case because the server will just read the packet as a packet originating from the CE 1 and discover on reading the payload that it contains data from the device 42.

As in the case of incoming data, the device 42 can spread the data over multiple packets and send an end-of-data flag at the end of the message.

When the device 42 is first installed, it needs to register with the remote server 47. It does this by sending a special message using the technique just described with its ID number and requesting registration with the server. The server can authenticate the message, and if valid register the device, and send back an updated blacklist and firmware using the IP address of the attached CE sent in the upstream message.

As noted, during operation the device can then use this technique to send suspicious IP addresses to the server to update its master blacklist for redistribution to other devices under its control.

Figure 6 is a diagram of a SIP packet. It has header 60 containing an IP address, which is ignored by the firewall. In addition the payload 62 contains a field 64 containing a start-of-data flag identifying the packet or subsequent packets as carrying a message for the firewall. The message is carried in field 66. This will normally be encrypted using an encryption key known to the firewall.

Different flags can be used in field 64 to identify start-of-data and end-of-data to allow for the data to be spread over multiple packets. When the device receives a start-of-data flag, it assumes all subsequent packets contain data for the device until it receives the end-of-data flag.

It should be appreciated by those skilled in the art that any block diagrams herein represent conceptual views of illustrative circuitry embodying the principles of the invention. For example, a processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. The functional blocks illustrated herein may in practice be implemented in hardware or software.

In one example, the device may be use an Atom based-board with multiple Ethernet interfaces. The device may use an embedded device driven by a Network Processor such as Atheros AR2317 or an Intel IXP435. The system may be based on Linux/uClinux prepared with standard toolchain distribution for the selected processor. In order to limit overall cost the system may use NAND for internal storage and NAND or SPI for bootloader (uBoot or equivalent).

## Claims

1. A method for protecting network services, comprising:
inspecting the payload of packets arriving at a network interface in the data link layer of a transparent bridging device to identify signaling packets;
queuing the signaling packets for further analysis;
analyzing the signaling packets for compliance with adaptive criteria to determine whether the packets are considered safe to pass to a user;
rejecting the signaling packets failing to meet the adaptive criteria;
maintaining historical data pertaining to the analyzed signaling packets; and
updating the adaptive criteria based on the historical data pertaining to the signaling packets from the same source address for the same user account.

2. A method as claimed in claim 1, wherein the signaling packets from the same source address that have been considered safe in the past are directed to a high priority queue and the remaining signaling packets are directed to a normal priority queue, and wherein the historical data preferably includes failed responses to registration requests originating from the same source.

3. A method as claimed in claim 1 or 2 wherein the adaptive criteria are set to reject a signaling packet containing the registration request from the source address for the same account after a set number of failed attempts, and the signaling packets are preferably SIP packets and at least one of the following header fields is inspected: Src IP, Dst IP, From/To user, Dst number.

4. A method as claimed in any one of claims 1 to 3, wherein pattern recognition is performed on the payload of the signaling packets to determine whether the packets meet the adaptive criteria.

5. A method as claimed in any one of claims 1 to 4, further comprising inspecting the arriving packets to identify a flag identifying a packet or subsequent packets as containing data destined for the bridging device, and extracting the data destined for the bridging device in payload of the packet and/or subsequent packets, and preferably wherein the data is encrypted.

6. A method as claimed in claim 5, wherein the data comprises blacklisted network addresses.

7. A method as claimed in any one of claims 1 to 6, further comprising creating at the transparent bridging device a packet addressed to a downstream network layer device containing a source address corresponding to a network layer device upstream of the transparent bridging device;
embedding the data in the payload of the packet and/or subsequent packets at the bridging device for the downstream network layer device.

8. A transparent bridging device for protecting network services having a data link layer network interface and a user interface, comprising:
a filter for extracting signaling packets arriving at a network interface in the data link layer by examining the payload; and
at least one queue for queuing the signaling packets for further analysis; and
a packet analyzer configured to analyze the signaling packets for compliance with adaptive criteria to determine whether the packets are considered safe to pass to a user, rejecting the signaling packets failing to meet the adaptive criteria, maintaining historical data pertaining to the analyzed signaling packets; and updating the adaptive criteria based on the historical data pertaining to the signaling packets from the same source address for the same user account.

9. A transparent bridging device as claimed in claim 8, wherein the filter is configured to direct the signaling packets from the same source address that have been considered safe in the past to a high priority queue and the remaining signaling packets to a normal priority queue.

10. A transparent bridging device as claimed in claim 8 or 9, wherein the historical data includes failed responses to registration requests originating from the same source.

11. A transparent bridging device as claimed in any one of claims 8 to 10, wherein the adaptive criteria are set to reject a signaling packet containing the registration request from the source address for the same account after a set number of failed attempts, and preferably wherein the signaling packets are SIP packets and at least one of the following header fields is inspected:
Src IP, Dst IP, From/To user, Dst number.

12. A transparent bridging device as claimed in any one of claims 8 to 11, wherein the packet analyzer is configured to perform pattern recognition is performed on the payload of the signaling packets to determine whether the packets meet the adaptive criteria.

13. A transparent bridging device as claimed in claim 12, wherein the packet analyzer is configured to identify a flag identifying the packet or subsequent packets as containing data destined for the bridging device and extract the data in the payload of the packet and/or subsequent packets.

14. A transparent bridging device as claimed in claim 13, wherein, and wherein the data comprises blacklisted addresses.

15. A transparent bridging device as claimed in any one of claims 8 to 14, further comprising a packet assembler for creating at the transparent bridging device a packet addressed to a network layer device downstream of the transparent bridging device and containing a source address corresponding to a network layer device upstream of the transparent bridging device;
the packet assembler being configured to embed the data in the payload of the packet and/or subsequent packets at the bridging device.
